# EUROPÄISCHE PATENTANMELDUNG

(11) **EP 1 277 989 A2**
(43) Veröffentlichungstag der Anmeldung: **22.01.2003**
(21) Anmeldenummer: 02014299.8
(22) Anmeldetag: 27.06.2002
(51) Int. Cl.: F16H 7/12

(54) **Spanneinrichtung für Zugmittel, insbesondere Riemenspanneinrichtung**

(30) Priorität: 05.07.2001 DE 10131916
(71) Anmelder: Muhr und Bender KG, 57439 Attendorn (DE)
(72) Erfinder: Asbeck, Jochen, Dr.-Ing., 57439 Attendorn (DE); Jud, Joachim, 57567 Daaden (DE); Berndt, Thomas, 56472 Hof (DE); Bonse, Rudolf, 57439 Attendorn (DE)
(74) Vertreter: Neumann, Ernst Dieter, Dipl.-Ing.

(57) **Zusammenfassung**

Spanneinrichtung für Zugmittel, insbesondere Riemenspanneinrichtung, mit einem Aufnahme- und Befestigungsgehäuse, mit einem mit dem Aufnahmeund Befestigungsgehäuse schwenkbar verbundenen Rollenträger, mit einem den Rollenträger gegenüber dem Aufnahme- und Befestigungsgehäuse radial und axial lagernden Lager, mit einer zwischen dem Rollenträger und dem Aufnahme- und Befestigungsgehäuse vorgesehenen Feder zum Aufbringen der Spannkraft und mit einer Dämpfungseinrichtung, wobei die Dämpfungseinrichtung eine Dämpfungsbuchse aufweist und mittels Reibung Bewegungen zwischen dem Rollenträger und dem Aufnahme- und Befestigungsgehäuse derart dämpft, daß die Dämpfung in Richtung ansteigender Spannkraft größer ist als in Richtung abfallender Spannkraft, wobei
zur Aufbringung der Reibungskraft auf die Dämpfungsbuchse (9) eine Bandfeder (10) vorgesehen ist und die Bandfeder (10) mit ihrem ersten Ende (11) drehfest am Aufnahme- und Befestigungsgehäuse (1) oder am Rollenträger (2) und mit ihrem zweiten Ende (12) drehfest an der Dämpfungsbuchse (9) befestigt ist.

## Beschreibung

Die Erfindung betrifft eine Spanneinrichtung für Zugmittel, insbesondere eine Riemenspanneinrichtung, mit einem Aufnahme- und Befestigungsgehäuse, mit einem mit dem Aufnahme- und Befestigungsgehäuse schwenkbar verbundenen Rollenträger, mit einem den Rollenträger gegenüber dem Aufnahmeund Befestigungsgehäuse radial und axial lagemden Lager, mit einer zwischen dem Rollenträger und dem Aufnahme- und Befestigungsgehäuse vorgesehenen Feder zum Aufbringen der Spannkraft und mit einer Dämpfungseinrichtung, wobei die Dämpfungseinrichtung eine Dämpfungsbuchse aufweist und mittels Reibung Bewegungen zwischen dem Rollenträger und dem Aufnahme- und Befestigungsgehäuse derart dämpft, daß die Dämpfung in Richtung ansteigender Spannkraft größer ist als in Richtung abfallender Spannkraft.

In Kraftfahrzeugen werden durch den Fahrzeugmotor verschiedene Nebenaggregate angetrieben, z. B. ein Generator, eine Wasserpumpe für Fahrzeugmotoren mit Wasserkühlung, eine Servopumpe für Kraftfahrzeuge mit Lenkhilfe und ein Kompressor für eine Klimaanlage. Dies geschieht durch eine auf der Kurbelwelle des Fahrzeugmotors sitzende Hauptriemenscheibe und durch einen endlosen Treibriemen, der einerseits über die Hauptriemenscheibe und andererseits über auf den Antriebswellen der Nebenaggregate sitzende Hilfsriemenscheiben läuft. Für die Funktionstüchtigkeit der Nebenaggregate und für die Lebensdauer des Treibriemens ist die Einstellung und die Beibehaltung einer bestimmten Riemenspannung des Treibriemens von besonderer Bedeutung. Zur Verbesserung der Funktionstüchtigkeit der Nebenaggregate und zur Erhöhung der Lebensdauer des Treibriemens wird ganz allgemein eine federbelastete Riemenspanneinrichtung verwendet, die in der Regel eine Dämpfungseinrichtung aufweist, so daß Schlupf und Schwingungen ausgeglichen bzw. vermindert werden können.

Eingangs ist ausgeführt worden, daß die Erfindung eine Spanneinrichtung für Zugmittel betrifft. Zuvor ist nun eine besondere Spanneinrichtung für Zugmittel im einzelnen angesprochen worden, nämlich eine Riemenspanneinrichtung. Im folgenden wird die Spanneinrichtung für Zugmittel, mit der sich die Erfindung befaßt, stets als Riemenspanneinrichtung angesprochen und beschrieben. Das ändert nichts daran, daß die beschriebene Spanneinrichtung für Zugmittel auch anderweitig eingesetzt werden kann, also nicht nur als Riemenspanneinrichtung.

Der eingangs beschriebene grundsätzliche Aufbau von Riemenspanneinrichtungen - Aufnahme- und Befestigungsgehäuse, mit dem Aufnahme- und Befestigungsgehäuse schwenkbar verbundener Rollenträger, den Rollenträger gegenüber dem Aufnahme- und Befestigungsgehäuse radial und axial lagerndes Lager, zwischen dem Rollenträger und dem Aufnahme- und Befestigungsgehäuse vorgesehene Feder zum Aufbringen der Spannkraft und Dämpfungseinrichtung - ist vielfach bekannt, wozu auf die deutschen Offenlegungsschriften 37 28 158, 41 24 636, 41 34 354, 43 36 467, 43 45 150, 44 27 683, 195 40 706 und 196 03 558, die deutschen Patentschriften 43 00 178 und 43 25 424, die europäischen Offenlegungsschriften 0 294 919 und 0 858 563 sowie die USA-Patentschriften 4,698,049 und 4,472,162 verwiesen wird. Wesentliche Unterschiede gibt es vor allem in bezug auf die Dämpfungseinrichtung.

Bei den Riemenspanneinrichtungen, die durch die deutschen Offenlegungsschriften 195 40 706 und 196 03 558 sowie durch die europäische Offenlegungsschrift 0 858 563 bekannt sind, sind in einer Baueinheit die Funktion des Lagers und die der Dämpfungseinrichtung verwirklicht; bei dieser Baueinheit handelt es sich um ein mittels Federkraft angestelltes Konusgleitlager, das einerseits den Rollenträger gegenüber dem Aufnahme- und Befestigungsgehäuse radial und axial lagert, daß andererseits mittels Reibung Bewegungen zwischen dem Rollenträger und dem Aufnahme- und Befestigungsgehäuse dämpft. Nachteilig ist bei diesen bekannten Riemenspanneinrichtungen, daß einerseits durch den unvermeidbaren Verschleiß des Konusgleitlagers der Rollenträger axial relativ zum Aufnahme- und Befestigungsgehäuse wandert, daß andererseits die Dämpfung in Belastungsrichtung, also in Richtung ansteigender Spannkraft, und in Entlastungsrichtung, also in Richtung abfallender Spannkraft, gleich groß ist.

Nächstkommender Stand der Technik für die Erfindung ist die Riemenspanneinrichtung, die aus der europäischen Offenlegungsschrift 0 294 919 bekannt ist. Bei dieser bekannten Riemenspanneinrichtung sind die beiden zuvor aufgezeigten Nachteile vermieden, die den Riemenspanneinrichtungen eigen sind, die aus den deutschen Offenlegungsschriften 195 40 706 und 196 03 558 sowie der europäischen Offenlegungsschrift 0 858 563 bekannt sind. Da bei der aus der europäischen Offenlegungsschrift 0 294 919 bekannten Riemenspanneinrichtung ein Konusgleitlager nicht verwirklicht ist, ist der mit einem solchen Konusgleitlager verbundene Nachteil, daß der Rollenträger axial relativ zum Aufnahme- und Befestigungsgehäuse wandert, vermieden. Im übrigen ist bei der aus der europäischen Offenlegungsschrift 0 294 919 bekannten Riemenspanneinrichtung die Dämpfungseinrichtung derart ausgestaltet, daß die Dämpfung in Richtung ansteigender Spannkraft größer ist als in Richtung abfallender Spannkraft.

Im einzelnen gehört zu der Dämpfungseinrichtung, die bei der Riemenspanneinrichtung nach der europäischen Offenlegungsschrift 0 294 919 verwirklicht ist, eine Dämpfungsbuchse und ein um die Dämpfungsbuchse gelegtes Band, dessen erstes Ende starr mit dem Aufnahme- und Befestigungsgehäuse verbunden ist und dessen anderes Ende mit einer Federkraft beaufschlagt ist. Die Federkraft zur Spannung des Bandes wird entweder durch eine zusätzliche Schraubenfeder am Aufnahme- und Befestigungsgehäuse aufgebracht oder durch die in erster Linie zur Aufbringung der Spannkraft erforderliche Feder, im Ausführungsbeispiel eine als Schenkelfeder ausgebildete Schraubenfeder, realisiert. Die erste Variante ist insoweit nachteilig, als der zusätzliche Aufwand, insbesondere die zusätzlich erforderliche Schraubenfeder, beachtlich ist. Nachteilig bei der zweiten Variante ist insbesondere die Tatsache, daß die Auslegung der Feder, die dem Aufbringen der Spannkraft dient, auch die Dämpfungscharakteristik der Riemenspanneinrichtung bestimmt; es fehlt also der für die Dämpfungscharakteristik wünschenswerte Freiheitsgrad.

Der Erfindung liegt nun die Aufgabe zugrunde, die Riemenspanneinrichtung, von der die Erfindung ausgeht, konstruktiv und fertigungstechnisch zu vereinfachen, so daß sie vor allem auch mit geringeren Kosten als die bekannte Riemenspanneinrichtung hergestellt werden kann.

Die erfindungsgemäße Riemenspanneinrichtung, bei der die zuvor hergeleitete und aufgezeigte Aufgabe gelöst ist, ist nun zunächst und im wesentlichen dadurch gekennzeichnet, daß zur Aufbringung der Reibungskraft auf die Dämpfungsbuchse eine Bandfeder vorgesehen ist und die Bandfeder mit ihrem ersten Ende drehfest an dem Aufnahme- und Befestigungsgehäuse oder an dem Rollenträger und mit ihrem zweiten Ende drehfest an der Dämpfungsbuchse befestigt ist.

Bei Riemenspanneinrichtungen der hier insgesamt in Rede stehenden Art wird die - Schlupf und Schwingungen ausgleichende bzw. vermindernde - Dämpfung durch Reibung erreicht, die bei Bewegungen zwischen dem Rollenträger und dem Aufnahme- und Befestigungsgehäuse auftritt. Einerseits sind dazu zueinander korrespondierende, konzentrisch verlaufende Reibflächen erforderlich; diese Reibflächen sind einerseits die innere oder äußere Mantelfläche der Dämpfungsbuchse und andererseits eine korrespondierende Reibfläche am Rollenträger oder am Aufnahme- und Befestigungsgehäuse. Andererseits wird - als Normalkraft - eine Reibkraft zwischen der Reibpaarung, also den zueinander korrespondierenden Reibflächen benötigt.

Bei der aus der europäischen Offenlegungsschrift 0 294 919 bekannten Riemenspanneinrichtung wird die für die Reibung erforderliche Reibkraft durch zwei Bauelemente wirksam, nämlich durch das um die Dämpfungsbuchse gelegte Band und durch eine Feder, mit der das um die Dämpfungsbuchse gelegte Band gespannt wird. Demgegenüber ist für die erfindungsgemäße Riemenspanneinrichtung wesentlich, daß die für die Reibung erforderliche Reibkraft durch ein einziges Bauelement wirksam wird, nämlich durch die die Dämpfungsbuchse - teilweise oder ganz - umfassende, einerseits am Aufnahme- und Befestigungsgehäuse oder am Rollenträger und andererseits an der Dämpfungsbuchse befestigte Bandfeder. Diese Bandfeder wirkt auf die Dämpfungsbuchse wie eine Federbandschelle z. B. auf ein zugeordnetes Schlauchende wirkt, - wobei jedoch der Tatsache, daß die Bandfeder einerseits am Aufnahme- und Befestigungsgehäuse oder am Rollenträger und andererseits an der Dämpfungsbuchse befestigt ist, besondere Bedeutung zukommt.

Dadurch, daß bei der erfindungsgemäßen Riemenspanneinrichtung eine einerseits am Aufnahme- und Befestigungsgehäuse oder am Rollenträger und andererseits an der Dämpfungsbuchse befestigte Bandfeder vorgesehen ist, ist die Dämpfungsbuchse - im wesentlichen - in Umfangsrichtung fixiert, - so daß Bewegungen zwischen dem Rollenträger und dem Aufnahme- und Befestigungsgehäuse Reibung zwischen den einander zugeordneten Reibflächen und damit Dämpfung erzeugt.

Zuvor ist ausgeführt, daß bei der erfindungsgemäßen Riemenspanneinrichtung die Dämpfungsbuchse im wesentlichen in Umfangsrichtung fixiert ist, also im wesentlichen gegen Verdrehen gesichert ist. Dieses "im wesentlichen" steht dafür, daß Bewegungen zwischen dem Rollenträger und dem Aufnahme- und Befestigungsgehäuse zu minimalen Drehbewegungen der Dämpfungsbuchse führen. Diese minimalen Drehbewegungen der Dämpfungsbuchse resultieren daraus, daß die Reibkraft zwischen den zueinander korrespondierenden Reibflächen zu einem auf die Dämpfungsbuchse wirkenden Drehmoment führt. Da nun die Dämpfungsbuchse nicht wirklich starr befestigt ist, vielmehr über die Bandfeder elastisch befestigt ist, resultiert aus dem auf die Dämpfungsbuchse wirkenden Drehmoment auch eine Drehbewegung der Dämpfungsbuchse. Diese - minimale - Drehbewegung der Dämpfungsbuchse führt dazu, daß sich der Durchmesser der die Dämpfungsbuchse - teilweise oder ganz - umfassenden Bandfeder minimal ändert und sich damit auch die aus der Bandfeder resultierende Reibkraft - und damit die Dämpfung - ändert.

Das, was zuvor erläutert worden ist, gibt nun die - gewollte - Möglichkeit, dafür zu sorgen, daß die Dämpfung in Belastungsrichtung, also in Richtung ansteigender Spannkraft, größer ist als in Entlastungsrichtung, also in Richtung abfallender Spannkraft. Natürlich muß dazu die Bandfeder "richtig" eingebaut sein; ein "falscher" Einbau der Bandfeder würde dazu führen, daß die Dämpfung in Belastungsrichtung, also in Richtung ansteigender Spannkraft, kleiner wäre als in Entlastungsrichtung, also in Richtung abfallender Spannkraft, was gerade nicht gewollt ist.

Im einzelnen gibt es nun eine Mehrzahl von Möglichkeiten, die erfindungsgemäße Riemenspanneinrichtung auszugestalten und weiterzubilden. Dazu wird verwiesen auf die dem Patentanspruch 1 nachgeordneten Patentansprüche und auf die Beschreibung eines bevorzugten Ausführungsbeispiels in Verbindung mit der Zeichnung. In der Zeichnung zeigen
- Fig. 1: eine Draufsicht auf ein bevorzugtes Ausführungsbeispiel einer erfindungsgemäßen Riemenspanneinrichtung,
- Fig. 2: einen Schnitt durch die Riemenspanneinrichtung nach Fig. 1 längs der Linie II - II,
- Fig. 3: einen Schnitt durch die Riemenspanneinrichtung nach Fig. 1 längs der Linie III - III und
- Fig. 4: eine schematische Darstellung zur weiteren Erläuterung der erfindungsgemäßen Riemenspanneinrichtung, etwa entsprechend einem Schnitt durch die Riemenspanneinrichtung nach Fig. 2 längs der Linie IV - IV.

Die Figuren zeigen eine Spanneinrichtung für Zugmittel, nämlich eine Riemenspanneinrichtung. Zu dieser Riemenspanneinrichtung gehören zunächst ein Aufnahme- und Befestigungsgehäuse 1, ein mit dem Aufnahme- und Befestigungsgehäuse 1 schwenkbar verbundener Rollenträger 2, ein den Rollenträger 2 gegenüber dem Aufnahme- und Befestigungsgehäuse 1 radial und axial lagerndes Lager 3, eine zwischen dem Rollenträger 2 und dem Aufnahme- und Befestigungsgehäuse 1 vorgesehene Feder zum Aufbringen der Spannkraft, im dargestellten Ausführungsbeispiel eine als Schenkelfeder ausgebildete Schraubenfeder 4, und eine Dämpfungseinrichtung 5.

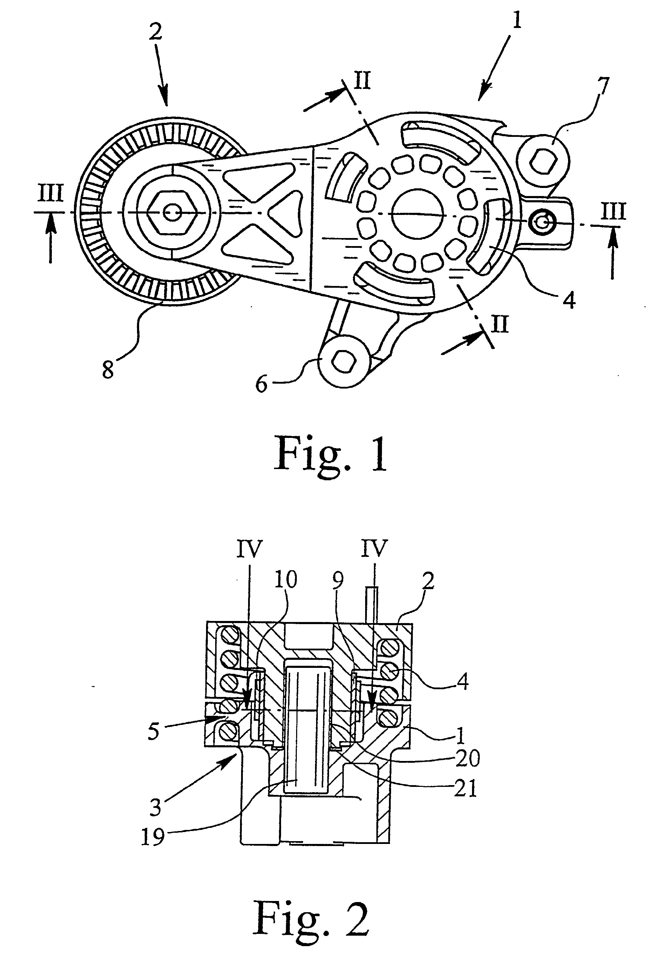

Wie die Fig. 1 zeigt, ist im dargestellten Ausführungsbeispiel das Aufnahmeund Befestigungsgehäuse 1 mit zwei Befestigungslaschen 6, 7 versehen. Mit Hilfe der Befestigungslaschen 6, 7 und nicht dargestellter Befestigungsschrauben kann das Aufnahme- und Befestigungsgehäuse 1 - und damit die Riemenspanneinrichtung insgesamt - befestigt werden, beispielsweise am nicht dargestellten Fahrzeugmotor. Am Rollenträger 2 ist, vorzugsweise über ein im einzelnen nicht zu beschreibendes Wälzlager, eine Spannrolle 8 drehbar gelagert. Im eingebauten Zustand der erfindungsgemäßen Riemenspanneinrichtung wirkt die Spannrolle 8 auf einen nicht dargestellten Treibriemen. Mit Hilfe der Spannrolle 8 erhält der nicht dargestellte Treibriemen eine bestimmte Riemenspannung, die für die Funktionstüchtigkeit von mit Hilfe des Treibriemens angetriebener Nebenaggregate und für die Lebensdauer des Treibriemens von besonderer Bedeutung ist. Die bei der erfindungsgemäßen Riemenspanneinrichtung auch vorgesehene Dämpfungseinrichtung 5 dient vor allem dazu, Schlupf und Schwingungen auszugleichen bzw. zu vermindem.

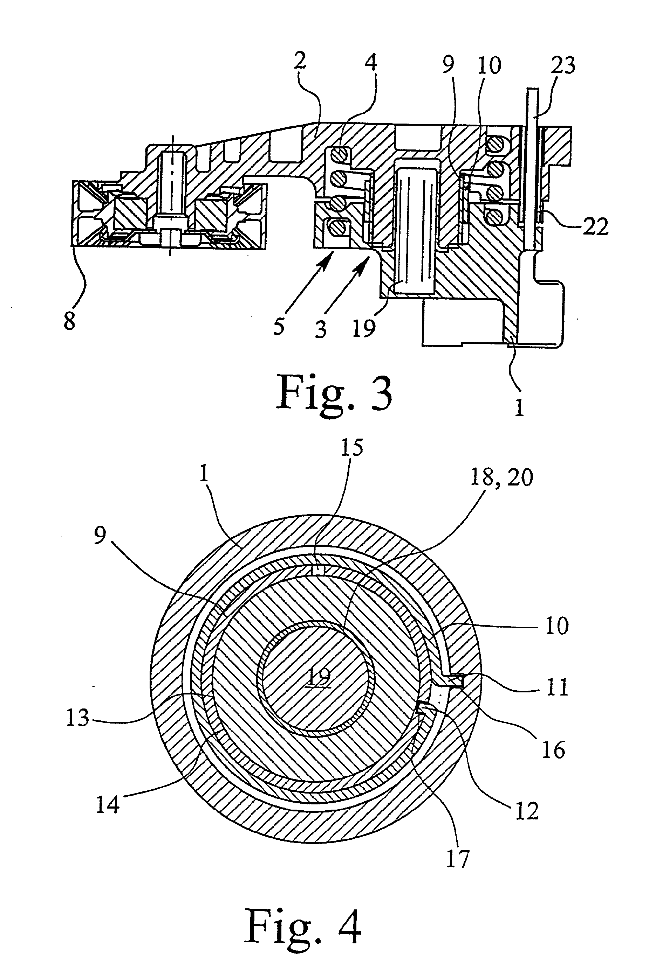

Wie die Fig. 2, 3 und 4 zeigen, gehört zu der Dämpfungseinrichtung 5 der erfindungsgemäßen Riemenspanneinrichtung eine Dämpfungsbuchse 9 und eine Bandfeder 10. Die Bandfeder 10 ist mit ihrem ersten Ende 11 drehfest am Aufnahme- und Befestigungsgehäuse 1 und mit ihrem zweiten Ende 12 drehfest an der Dämpfungsbuchse 9 befestigt.

Bei Riemenspanneinrichtungen der hier insgesamt in Rede stehenden Art, also auch bei der erfindungsgemäßen Riemenspanneinrichtung, wird die - Schlupf und Schwingungen ausgleichende bzw. vermindernde - Dämpfung durch Reibung erreicht, die bei Bewegungen zwischen dem Rollenträger 2 und dem Aufnahme- und Befestigungsgehäuse 1 auftritt. Einerseits sind dazu zueinander korrespondierende, konzentrisch verlaufende Reibflächen erforderlich; diese Reibflächen sind im dargestellten Ausführungsbeispiel einerseits die innere Mantelfläche 13 der Dämpfungsbuchse 9 und andererseits eine korrespondierende Reibfläche 14 am Rollenträger 2. Andererseits wird - als Normalkraft - eine Reibkraft zwischen der Reibpaarung, also der inneren Mantelfläche 13 der Dämpfungsbuchse 9 und der dazu korrespondierenden Reibfläche 14 am Rollenträger 2, benötigt.

Für die erfindungsgemäße Riemenspanneinrichtung ist wesentlich, daß die für die Reibung erforderliche Reibkraft durch ein einziges Bauelement wirksam wird, nämlich durch die die Dämpfungsbuchse 9 - teilweise oder ganz - umfassende, einerseits am Aufnahme- und Befestigungsgehäuse 1 und andererseits an der Dämpfungsbuchse 9 befestigte Bandfeder 10. Diese Bandfeder 10 wirkt auf die Dämpfungsbuchse 9 so, wie z. B. eine Federbandschelle auf ein zugeordnetes Schlauchende wirkt, - wobei der Tatsache besondere Bedeutung zukommt, daß die Bandfeder 10 einerseits am Aufnahme- und Befestigungsgehäuse 1 und andererseits an der Dämpfungsbuchse 9 befestigt ist. Dadurch, daß bei der erfindungsgemäßen Riemenspanneinrichtung eine einerseits am Aufnahme- undBefestigungsgehäuse 1 und andererseits an der Dämpfungsbuchse 9 befestigte Bandfeder 10 vorgesehen ist, ist die Dämpfungsbuchse 9 - im wesentlichen - in Umfangsrichtung fixiert, so daß Bewegungen zwischen dem Rollenträger 2 und dem Aufnahme- und Befestigungsgehäuse 1 Reibung zwischen den einander zugeordneten Reibflächen, also der inneren Mantelfläche 13 der Dämpfungsbuchse 9 und der korrespondierenden Reibfläche 14 am Rollenträger 2, und damit Dämpfung erzeugt.

Bei der erfindungsgemäßen Riemenspanneinrichtung ist die Dämpfungsbuchse 9 im wesentlichen in Umfangsrichtung fixiert, also im wesentlichen gegen Verdrehen gesichert. Tatsächlich führen ja Bewegungen zwischen dem Rollenträger 2 und dem Aufnahme- und Befestigungsgehäuse 1 zu minimalen Drehbewegungen der Dämpfungsbuchse 9. Diese minimalen Drehbewegungen der Dämpfungsbuchse 9 resultieren daraus, daß die Reibkraft zwischen den zueinander korrespondierenden Reibflächen, also der inneren Mantelfläche 13 der Dämpfungsbuchse 9 und der dazu korrespondierenden Reibfläche 14 des Rollenträgers 2, zu einem auf die Dämpfungsbuchse 9 wirkenden Drehmoment führt. Nun ist die Dämpfungsbuchse 9 nicht wirklich starr befestigt, vielmehr über die Bandfeder 10 elastisch befestigt. Folglich resultiert aus dem auf die Dämpfungsbuchse 9 wirkenden Drehmoment auch eine Drehbewegung der Dämpfungsbuchse 9. Diese - minimale - Drehbewegung der Dämpfungsbuchse 9 führt dazu, daß sich der Durchmesser der die Dämpfungsbuchse 9 - teilweise oder ganz - umfassenden Bandfeder 10 minimal ändert und sich damit auch die aus der Bandfeder 10 resultierende Reibkraft - und damit die Dämpfung - ändert. Das gibt die - gewollte - Möglichkeit, dafür zu sorgen, daß die Dämpfung in Belastungsrichtung, also in Richtung ansteigender Spannkraft, größer ist als in Entlastungsrichtung, also in Richtung abfallender Spannkraft. Dazu ist die Bandfeder 10 so eingebaut, daß bei einer Bewegung des Rollenträgers 2 in Belastungsrichtung, also in Richtung ansteigender Spannkraft, der Durchmesser der die Dämpfungsbuchse 9 umfassenden Bandfeder 10 minimal kleiner wird.

Aus dem, was zuvor ausgeführt ist, folgt, daß es möglich sein muß, daß die Dämpfungsbuchse 9 - durch die auf sie einwirkende Reibkraft - ihren Durchmesser verändert. Das könnte dadurch realisiert sein, daß die Dämpfungsbuchse aus einem hinreichend elastischen Material besteht. Vorzugsweise ist das jedoch dadurch erreicht, daß die Dämpfungsbuchse 9 geschlitzt ist, nämlich einen Durchmesserreduzierungsschlitz 15 aufweist.

Zur Lehre der Erfindung gehört, daß die - zu der Dämpfungseinrichtung 5 gehörende - Bandfeder 10 mit ihrem ersten Ende 11 drehfest am Aufnahmeund Befestigungsgehäuse 1 (oder am Rollenträger 2) und mit ihrem zweiten Ende 12 drehfest an der Dämpfungsbuchse 9 befestigt ist. Das läßt sich auf ganz unterschiedliche Weise realisieren. Vorzugsweise ist die Bandfeder 10 mit ihrem ersten Ende 11 formschlüssig am Aufnahme- und Befestigungsgehäuse 1 befestigt, nämlich, wie im dargestellten Ausführungsbeispiel, mit ihrem ersten Ende 11 in einem am Aufnahme- und Befestigungsgehäuse 1 vorgesehenen Befestigungsschlitz 16 gehalten. Das, was zuvor in bezug auf die Befestigung der Bandfeder 10 mit ihrem ersten Ende 11 ausgeführt ist, kann auch auf die Befestigung der Bandfeder 10 mit ihrem zweiten Ende 12 übertragen werden. Die Bandfeder 10 kann also mit ihrem zweiten Ende 12 formschlüssig an der Dämpfungsbuchse 9 befestigt sein. Insbesondere kann die Bandfeder 10 mit ihrem zweiten Ende 12 in einem an der Dämpfungsbuchse 9 vorgesehenen Befestigungsschlitz 17 gehalten sein. Nicht dargestellt ist die Möglichkeit, die Bandfeder 10 mit ihrem zweiten Ende 12 im Durchmesserreduzierungsschlitz 15 der Dämpfungsbuchse 9 zu halten.

Für die erfindungsgemäße Riemenspanneinrichtung gilt, wie bereits ausgeführt, daß ein Lager 3 vorgesehen ist, das den Rollenträger 2 gegenüber dem Aufnahme- und Befestigungsgehäuse 1 radial und axial lagert. In dem Ausführungsbeispiel, das in den Figuren dargestellt ist, besteht das den Rollenträger 2 gegenüber dem Aufnahme- und Befestigungsgehäuse 1 radial und axial lagernde Lager 3 aus einer mit dem Rollenträger 2 verbundenen Lagerbuchse 18 und einem mit dem Aufnahme- und Befestigungsgehäuse verbundenen Lagerbolzen 19. Die Lagerbuchse 18 ihrerseits besteht aus einem der radialen Lagerung dienenden Lagerhülse 20 und einem der axialen Lagerung dienenden Lagerbund 21.

Bei der erfindungsgemäßen Riemenspanneinrichtung könnte die dem Aufbringen der Spannkraft zwischen dem Rollenträger 2 und dem Aufnahme- und Befestigungsgehäuse 1 dienende Feder als Flachspiralfeder ausgerührt sein. Im dargestellten Ausführungsbeispiel ist jedoch für die Aufbringung der Spannkraft zwischen dem Rollenträger 2 und dem Aufnahme- und Befestigungsgehäuse 1 eine als Schenkelfeder ausgebildete Schraubenfeder 4 vorgesehen. Dabei gilt für das Ausführungsbeispiel, daß die Schraubenfeder 4 - auf Zug beansprucht - auch den Rollenträger 2 mit dem Aufnahme- und Befestigungsgehäuse 1 verbindet und den Rollenträger 2 - über das Lager 3 - axial in bezug auf das Aufnahme- und Befestigungsgehäuse 1 fixiert. Die bei dieser Konstruktion zwischen dem Lagerbund 21 der Lagerbuchse 18 und dem Aufnahme- und Befestigungsgehäuse 1 bei einer Bewegung zwischen dem Rollenträger 2 und dem Aufnahme- und Befestigungsgehäuse 1 auftretende Reibung ist vernachlässigbar klein gegenüber der Reibung, die gewollt im Bereich der Dämpfungseinrichtung 5 auftritt.

Für das dargestellte und beschriebene Ausführungsbeispiel gilt, daß die Dämpfungsbuchse 9 - über die Bandfeder 10 - drehfest am Aufnahme- und Befestigungsgehäuse 1 befestigt ist. Selbstverständlich ist es auch ohne weiteres möglich, die Dämpfungsbuchse 9 über die Bandfeder 10 drehfest am Rollenträger 2 zu befestigen.

Schließlich sei noch darauf hingewiesen, daß bei dem dargestellten Ausführungsbeispiel einer erfindungsgemäßen Riemenspanneinrichtung eine Spannbuchse 22 und ein Spannstift 23 vorgesehen sind. Die Spannbuchse 22 dient als Anschlag zur Begrenzung der möglichen Bewegung zwischen dem Rollenträger 2 und dem Aufnahme- und Befestigungsgehäuse 1. Mit dem Spannstift 23, der durch die Spannbuchse 22 gesteckt werden kann, kann die erfindungsgemäße Riemenspanneinrichtung in der Montagestellung fixiert werden.

## Patentansprüche

1. Spanneinrichtung für Zugmittel, insbesondere Riemenspanneinrichtung, mit einem Aufnahme- und Befestigungsgehäuse, mit einem mit dem Aufnahmeund Befestigungsgehäuse schwenkbar verbundenen Rollenträger, mit einem den Rollenträger gegenüber dem Aufnahme- und Befestigungsgehäuse radial und axial lagernden Lager, mit einer zwischen dem Rollenträger und dem Aufnahme- und Befestigungsgehäuse vorgesehenen Feder zum Aufbringen der Spannkraft und mit einer Dämpfungseinrichtung, wobei die Dämpfungseinrichtung eine Dämpfungsbuchse aufweist und mittels Reibung Bewegungen zwischen dem Rollenträger und dem Aufnahme- und Befestigungsgehäuse derart dämpft, daß die Dämpfung in Richtung ansteigender Spannkraft größer ist als in Richtung abfallender Spannkraft, **dadurch gekennzeichnet, daß** zur Aufbringung der Reibungskraft auf die Dämpfungsbuchse (9) eine Bandfeder (10) vorgesehen ist und die Bandfeder (10) mit ihrem ersten Ende (11) drehfest am Aufnahme- und Befestigungsgehäuse (1) oder am Rollenträger (2) und mit ihrem zweiten Ende (12) drehfest an der Dämpfungsbuchse (9) befestigt ist.

2. Spanneinrichtung nach Anspruch 1, **dadurch gekennzeichnet, daß** die Dämpfungsbuchse aus einem elastischen Material besteht.

3. Spanneinrichtung nach Anspruch 1, **dadurch gekennzeichnet, daß** die Dämpfungsbuchse (9) geschlitzt ist, nämlich einen Durchmesserreduzierungsschlitz (15) aufweist.

4. Spanneinrichtung nach einem der Ansprüche 1 bis 3, **dadurch gekennzeichnet, daß** die Bandfeder (10) mit ihrem ersten Ende (11) formschlüssig oder materialschlüssig am Aufnahme- und Befestigungsgehäuse (1) befestigt ist.

5. Spanneinrichtung nach Anspruch 4, **dadurch gekennzeichnet, daß** die Bandfeder (10) mit ihrem ersten Ende (11) in einem am Aufnahme- und Befestigungsgehäuse (1) vorgesehenen Befestigungsschlitz (16) gehalten ist.

6. Spanneinrichtung nach einem der Ansprüche 1 bis 5, **dadurch gekennzeichnet, daß** die Bandfeder (10) mit ihrem zweiten Ende (12) formschlüssig oder materialschlüssig an der Dämpfungsbuchse (9) befestigt ist.

7. Spanneinrichtung nach Anspruch 6, **dadurch gekennzeichnet, daß** die Bandfeder (10) mit ihrem zweiten Ende (12) in einem an der Dämpfungsbuchse (9) vorgesehenen Befestigungsschlitz (17) gehalten ist.

8. Spanneinrichtung nach einem der Ansprüche 3 bis 5 und nach Anspruch 6, **dadurch gekennzeichnet, daß** die Bandfeder mit ihrem zweiten Ende im Durchmesserreduzierungsschlitz der Dämpfungsbuchse gehalten ist.

9. Spanneinrichtung nach einem der Ansprüche 1 bis 8, **dadurch gekennzeichnet, daß** das den Rollenträger (2) gegenüber dem Aufnahme- und Befestigungsgehäuse (1) radial und axial lagemde Lager (3) aus einer mit dem Rollenträger (2) verbundenen Lagerbuchse (18) und einem mit dem Aufnahmeund Befestigungsgehäuse (1) verbundenen Lagerbolzen (19) besteht.

10. Spanneinrichtung nach Anspruch 9, **dadurch gekennzeichnet, daß** die Lagerbuchse (18) aus einem der radialen Lagerung dienenden Lagerhülse (20) und einem der axialen Lagerung dienenden Lagerbund (21) besteht.

11. Spanneinrichtung nach einem der Ansprüche 1 bis 10, **dadurch gekennzeichnet, daß** die zwischen dem Rollenlager und dem Aufnahme- und Befestigungsgehäuse vorgesehene, dem Aufbringen der Spannkraft dienende Feder als Flachspiralfeder ausgeführt ist.

12. Spanneinrichtung nach einem der Ansprüche 1 bis 10, **dadurch gekennzeichnet, daß** die zwischen dem Rollenträger (2) und dem Aufnahme- und Befestigungsgehäuse (1) vorgesehene Feder eine Schraubenfeder (4) ist.

13. Spanneinrichtung nach Anspruch 12, **dadurch gekennzeichnet, daß** die Schraubenfeder (4) - auf Zug beansprucht - auch den Rollenträger (2) mit dem Aufnahme und Befestigungsgehäuse (1) verbindet und den Rollenträger (2) - über das Lager (3) - axial in bezug auf das Aufnahme- und Befestigungsgehäuse (1) fixiert.
